# EUROPÄISCHE PATENTANMELDUNG

(11) **EP 2 123 840 A1**
(43) Veröffentlichungstag der Anmeldung: **25.11.2009**
(21) Anmeldenummer: 09160911.5
(22) Anmeldetag: 22.05.2009
(51) Int. Cl.: E04C 2/16, B32B 3/02, B32B 21/00, E04B 1/80, E04F 13/10

(54) **Wärmedämmelement**

(30) Priorität: 21.05.2008 DE 202008006889 U
(71) Anmelder: Brühwiler, Markus, 8362 Balterswil (CH)
(72) Erfinder: Brühwiler, Markus, 8592 Uttwil (CH)
(74) Vertreter: HOFFMANN EITLE

(57) **Zusammenfassung**

Ein Wärmedämmelement (1) zum Erstellen und/oder Wärmedämmen von Bauwerken umfasst zumindest eine Deckschicht (2), die zumindest abschnittsweise aus einem Holzwerkstoff besteht, und zumindest eine Wärmedämmschicht (4), die zumindest abschnittsweise aus einem Holzwerkstoff besteht und mit der mindestens einen Decksicht (2) in einer Verbindungsebene verbunden ist, wobei die mindestens eine Deckschicht (2) in mindestens einer Richtung in der Verbindungsebene einen ersten Überstand (11) über die Wärmedämmschicht (4) aufweist, und wobei die Wärmedämmschicht (4) in mindestens einer Richtung in der Verbindungsebene einen zweiten Überstand (12) über die zumindest eine Deckschicht (2) aufweist.

## Beschreibung

### Technisches Gebiet

Die Erfindung betrifft ein Wärmedämmelement zum Erstellen und/oder Wärmedämmen von Bauwerken, das einen Sandwich-Aufbau mit mindestens einer Deckschicht und mindestens einer Wärmedämmschicht aufweist.

### Stand der Technik

Für die Wärmedämmung von Bauwerken sind im Stand der Technik zahllose Wärmedämmplatten bekannt. Die hierfür verwendeten Materialien reichen von Holz über Stahl, Beton und Glas bis hin zu verschiedenen Kunststoffen und Kunststoffschäumen. Letztere kommen häufig bei sogenannten Wärmedämmverbundsystemen zum Einsatz, bei denen beispielsweise Platten aus expandiertem Polystyrol an Gebäudeaußenwänden angebracht werden. Derartige Wärmedämmelemente besitzen jedoch den Nachteil, dass sie einen hohen Energieeinsatz bei der Herstellung erfordern und nicht umweltfreundlich entsorgt werden können. Darüber hinaus sind Wärmedämmplatten aus Kunststoff auch aus baubiologischer Sicht bisweilen unerwünscht.

Wärmedämmplatten aus Beton, Stahl, Glas oder dergleichen besitzen architektonische Vorteile, erfordern jedoch ebenfalls einen hohen Energieeinsatz bei der Herstellung und sind nur schwierig zu entsorgen. Ferner sind derartige Wärmedämmplatten meist mit einem hohen Montageaufwand verbunden.

Darüber hinaus kommen zunehmend auch Fassadenplatten zum Einsatz, die auf Holz bzw. Holzwerkstoffen basieren. Hierbei handelt es sich meist um vorgehängte, hinterlüftete Konstruktionen mit geringer eigener Wärmedämmung und vergleichsweise aufwändiger Montage.

### Darstellung der Erfindung

Es ist daher Aufgabe der Erfindung, ein Wärmedämmelement zum Erstellen und/oder Wärmedämmen von Bauwerken bereitzustellen, das bei einfacher Montage und umweltfreundlicher Herstellung bzw. Entsorgung eine gute Wärmedämmung bietet.

Diese Aufgabe wird erfindungsgemäß durch ein Wärmedämmelement nach Anspruch 1 gelöst. Besonders bevorzugte Ausführungsformen der Erfindung sind in den abhängigen Ansprüchen angegeben.

Der Erfindung liegt der Gedanke zugrunde, konstruktive und ökologische Aspekte in einem einzigen Wärmedämmelement zu vereinen. Zu diesem Zweck weist das erfindungsgemäße Wärmedämmelement eine neuartige Kombination und mindestens eine Deckschicht, die zumindest abschnittsweise aus einem Holzwerkstoff besteht, und mindestens einer Wärmedämmschicht, die ebenfalls zumindest abschnittsweise aus einem Holzwerkstoff besteht und mit der mindestens einen Deckschicht in einer Verbindungsebene verbunden ist, auf. Dabei weist die mindestens eine Deckschicht in mindestens einer Richtung in der Verbindungsebene einen ersten Überstand über die Wärmedämmschicht auf, und gleichzeitig weist die Wärmedämmschicht wiederum in mindestens einer Richtung in der Verbindungsebene einen zweiten Überstand über die zumindest eine Deckschicht auf.

Auf diese Weise wird auf der Grundlage ökologischer Materialien, die mit geringem Energieaufwand hergestellt und umweltfreundlich entsorgt (bzw. sogar zur Energieerzeugung genutzt werden) können, ein Wärmedämmelement bereitgestellt, das mit gleichartigen Wärmedämmelementen problemlos gestapelt werden können, um auf diese Weise an einem Bauwerk eine Wärmedämmschicht vorzusehen bzw. sogar eine ganze Bauwerkswand zu erstellen. Dabei weist das Wärmedämmelement einen einfachen Sandwichaufbau auf und erfordert keine besonderen Ausrichtvorgänge während der Montage.

Gemäß einer Weiterbildung der Erfindung ist vorgesehen, dass der erste Überstand und der zweite Überstand auf gegenüberliegenden Seiten des Wärmedämmelements angeordnet und bevorzugt komplementär sind. Auf diese Weise ergibt sich eine besonders stabile Stapelbarkeit erfindungsgemäßer Wärmedämmelemente und eine geringe Fehlerwahrscheinlichkeit.

Innerhalb dieses Konzepts ist es besonders bevorzugt, dass die mindestens eine Deckschicht in mindestens einer Richtung der Verbindungsebene einen dritten Übersand über die Wärmedämmschicht aufweist, und/oder die Wärmedämmschicht in mindestens einer Richtung in der Verbindungsebene einen vierten Überstand über die zumindest eine Deckschicht aufweist. In diesem Falle lässt sich mit einer einzigen Art von Wärmedämmelement eine vollständige Wand bzw. Dämmschicht erstellen, die nicht nur leicht hergestellt werden kann, sondern gleichzeitig auch senkrecht zur Verbindungsebene ohne zusätzliche Hilfsmittel eine hohe Stabilität besitzt. Dies ist im Hinblick auf die im Gebäudeaußenbereich auftretenden hohen Windlasten von besonderem Vorteil.

Obgleich das erfindungsgemäße Wärmedämmelement prinzipiell mit einer einzigen, meist außen liegenden Deckschicht auskommen kann, ist gemäß einer Weiterbildung der Erfindung vorgesehen, dass das Wärmedämmelement zumindest zwei Deckschichten aufweist, die bevorzugt auf gegenüberliegenden Seiten der Wärmedämmschicht angeordnet sind. Auf diese Weise eignet sich das Wärmedämmelement ohne zusätzliche Bauteile unmittelbar auch als eigenständiges Wandelement. Ferner erhält das Wärmedämmelement durch den bevorzugten Aufbau eine hohe statische Tragfähigkeit und Steifigkeit.

Gemäß einer Weiterbildung der Erfindung ist ferner vorgesehen, dass die mindestens eine Deckschicht mit der mindestens einen Wärmedämmschicht zumindest abschnittsweise verklebt ist. Hierdurch können mögliche Wärmebrücken weiter vermindert werden, da die mindestens eine Deckschicht ohne Durchbrüche auskommen kann. Ferner werden Lasteinleitungsspitzen in der Wärmedämmschicht, die meist eine geringe Festigkeit hat also die Deckschicht, vermieden, sodass eine gleichmäßige Krafteinleitung in die Wärmedämmschicht stattfindet, sodass auch hohe Windlasten aufgenommen werden können. Nicht zuletzt ermöglicht eine Verklebung von Deckschicht(en) und Wärmedämmschicht eine einfache Herstellung.

Darüber hinaus ist gemäß einer Weiterbildung der Erfindung vorgesehen, dass an mindestens einer Stirnseite der mindestens einen Deckschicht ein Dichtungselement vorgesehen ist, insbesondere im Bereich mindestens eines Überstands. Hierdurch können etwaige Toleranzen des Bauwerks oder auch des Wärmedämmelements ausgeglichen werden, und die Wärmedämmung kann weiter verbessert werden.

Die Wärmedämmschicht kann im Rahmen der vorliegenden Erfindung durch unterschiedlichste, Holz-basierte Materialien gebildet sein, wobei sich Holzfaser- und Holzspanmaterialien als besonders vorteilhaft erwiesen haben. Dabei ist es besonders bevorzugt, dass die Wärmedämmschicht eine Wärmeleitfähigkeit von höchsten 0,07, bevorzugt höchstens 0,05 W/mK aufweist. Hierdurch lassen sich in Kombination mit der mindestens einen Holz-basierten Deckschicht optimale Wärmedämmeigenschaften mit hervorragenden statischen und konstruktiven Eigenschaften verbinden.

Die mindestens eine Deckschicht kann im Rahmen der vorliegenden Erfindung ebenfalls auf unterschiedlichste Art und Weise ausgestaltet sein. Als besonders vorteilhaft hat sich jedoch der Einsatz von Spanplatten als Deckschicht erwiesen, wobei besonders bevorzugt eine Spanplatte gemäß der noch nicht veröffentlichten europäischen Patentanmeldung EP 07 017 353.9 zum Einsatz kommt. Diese zeichnet sich durch eine extrem hohe Witterungsbeständigkeit bei einfacher Herstellung aus. Im Einzelnen wird auf die Offenbarung der EP 07 017 353.9 verwiesen.

### Kurze Beschreibung der Zeichnungen

Fig. 1 zeigt schematisch eine Perspektivansicht einer Ausführungsform des erfindungsgemäßen Wärmedämmelements;
Fig. 2 zeigt schematisch eine Stirnansicht des in Fig. 1 gezeigten Wärmedämmelements;
Fig. 3 zeigt eine Perspektivansicht mehrerer, miteinander verbundener Wärmedämmelemente aus Fig. 1.

### Ausführliche Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben.

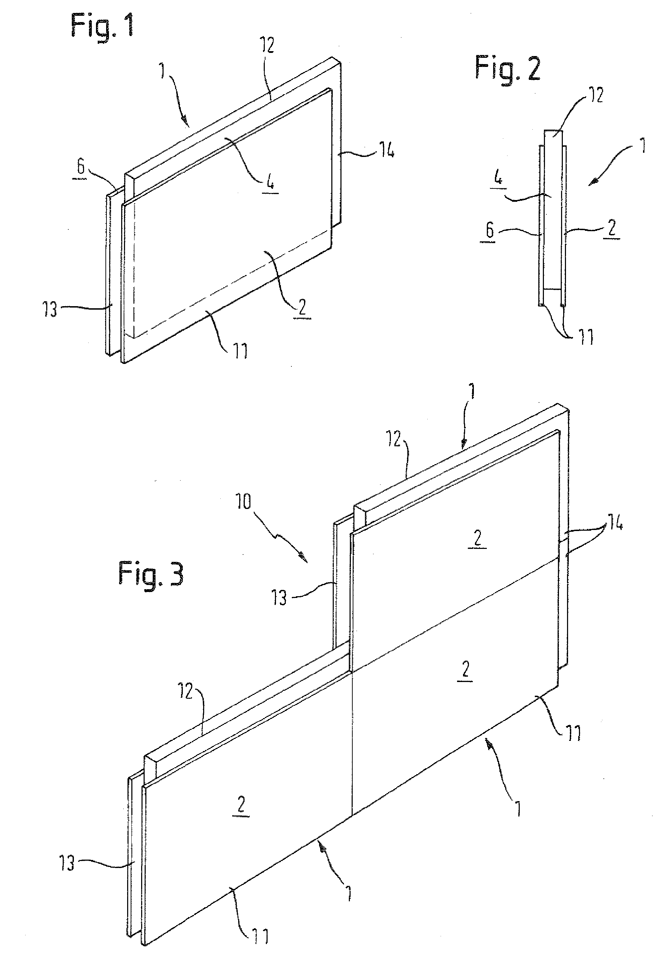

Ein Wärmedämmelement 1 als bevorzugte Ausführungsform der vorliegenden Erfindung ist in Fig. 1 und Fig.2 schematisch in einer Perspektivansicht bzw. Stirnansicht dargestellt. Das Wärmedämmelement umfasst in der vorliegenden Ausführungsform zwei Deckschichten 2, 6, die jeweils durch eine Spanplatte gebildet sind, wie sie beispielsweise in der noch nicht veröffentlichten europäischen Patentanmeldung EP 07 017 353.9 beschrieben ist. Es kann jedoch selbstverständliche auch jede andere Art von Deckschicht zum Einsatz kommen, die zumindest abschnittsweise aus einem Holzwerkstoff besteht.

Zwischen den Deckschichten 2, 6 ist eine Wärmedämmschicht 4 angeordnet und in einer Verbindungsebene mit den Deckschichten 2, 6 verbunden bzw. in der vorliegenden Ausführungsform verklebt. Bei der Verbindungsebene handelt es sich somit um die Ebene der flächigen Erstreckung der Deckschichten 2, 6 bzw. der Wärmedämmschicht 4. Die Wärmedämmschicht 4 ist in der vorliegenden Ausführungsform beispielsweise durch eine Unterdeckplatte vom Typ Gutex Ultratherm gebildet. Es handelt sich somit beispielsweise um eine Faserplatte aus Tannen- und Fichtenholz, das durch PUR-Harz und Parafin gebunden ist. Es ist jedoch zu beachten, dass auch für die Wärmedämmschicht 4 vielfältige Materialien, die zumindest abschnittsweise aus einem Holzwerkstoff bestehen, zum Einsatz kommen können.

Die Wärmedämmschicht 4 besitzt in zwei Richtungen einen Überstand über die Deckschichten 2, 6, und zwar einen Überstand 12 in einer Richtung von oben nach unten in Fig. 1 sowie einen Überstand 14 in einer hierzu senkrechten Richtung innerhalb der Verbindungsebene.

In komplementärer Weise besitzen die Deckschichten 2, 6 jeweils zwei Überstände über die Wärmedämmschicht 4, wobei ein Überstand 13 der Deckschichten 2, 6 den Überstand 14 der Deckschicht 4 gegenüberliegt und ein weiterer Überstand 11 der Deckschichten 2, 6 dem überstand 12 der Wärmedämmschicht 4 gegenüberliegt. Auf diese Weise lassen sich die Wärmedämmelemente in komplementärer Weise stapeln, wobei der gestapelte bzw. in horizontaler Richtung ineinandergreifende Zustand dreier Wärmedämmelemente 1 in Fig. 3 schematisch dargestellt ist. Diese Wärmedämmelemente bilden gemeinsam einen Wandabschnitt 10, der beispielsweise als Wärmedämmhülle oder auch als Außenwand eines Bauwerks dienen kann.

## Patentansprüche

1. Wärmedämmelement (1) zum Erstellen und/oder Wärmedämmen von Bauwerken, umfassend:
zumindest eine Deckschicht (2), die zumindest abschnittsweise aus einem Holzwerkstoff besteht, und
zumindest eine Wärmedämmschicht (4), die zumindest abschnittsweise aus einem Holzwerkstoff besteht und mit der mindestens einen Decksicht (2) in einer Verbindungsebene verbunden ist, wobei
die mindestens eine Deckschicht (2) in mindestens einer Richtung in der Verbindungsebene einen ersten Überstand (11) über die Wärmedämmschicht (4) aufweist, und wobei
die Wärmedämmschicht (4) in mindestens einer Richtung in der Verbindungsebene einen zweiten Überstand (12) über die zumindest eine Deckschicht (2) aufweist.

2. Wärmedämmelement nach Anspruch 1, **dadurch gekennzeichnet, dass** der erste Überstand (11) und der zweite Überstand (12) auf gegenüberliegenden Seiten des Wärmedämmelements (1) angeordnet und bevorzugt komplementär sind.

3. Wärmedämmelement nach Anspruch 1 oder 2, **dadurch gekennzeichnet, dass** die mindestens eine Deckschicht (2) in mindestens einer Richtung in der Verbindungsebene einen dritten Überstand (13) über die Wärmedämmschicht (4) aufweist, und/oder
die Wärmedämmschicht (4) in mindestens einer Richtung in der Verbindungsebene einen vierten Überstand (14) über die zumindest eine Deckschicht (2) aufweist.

4. Wärmedämmelement nach einem der vorhergehenden Ansprüche, **dadurch gekennzeichnet, dass** es zumindest zwei Deckschichten (2, 6) aufweist, die bevorzugt auf gegenüberliegenden Seiten der Wärmedämmschicht (4) angeordnet sind.

5. Wärmedämmelement nach einem der vorhergehenden Ansprüche, **dadurch gekennzeichnet, dass** die mindestens eine Deckschicht (2) mit der mindestens einen Wärmedämmschicht (4) zumindest abschnittsweise verklebt ist.

6. Wärmedämmelement nach einem der vorhergehenden Ansprüche, **dadurch gekennzeichnet, dass** an mindestens einer Stirnseite der mindestens einen Deckschicht (2) ein Dichtungselement vorgesehen ist, insbesondere im Bereich mindestens eines Überstands (11).

7. Wärmedämmelement nach einem der vorhergehenden Ansprüche, **dadurch gekennzeichnet, dass** die Wärmedämmschicht (4) durch ein Holzfaser- und/oder Holzspanmaterial aufweist.

8. Wärmedämmelement nach einem der vorhergehenden Ansprüche, **dadurch gekennzeichnet, dass** die Wärmedämmschicht (4) eine Wärmeleitfähigkeit von höchstens 0,07, bevorzugt höchstens 0,05 W/mK aufweist.

9. Wärmedämmelement nach einem der vorhergehenden Ansprüche, **dadurch gekennzeichnet, dass** die mindestens eine Deckschicht (2) eine Spanplatte aufweist.
